# EUROPÄISCHE PATENTSCHRIFT

(11) **EP 3 757 263 B1**
(45) Veröffentlichungstag und Bekanntmachung des Hinweises auf die Patenterteilung: **11.05.2022**
(21) Anmeldenummer: 20178498.0
(22) Anmeldetag: 05.06.2020
(51) Int. Cl.: D01H 4/50, D01H 11/00

(54) **VERFAHREN ZUM BETREIBEN EINER ABSAUGVORRICHTUNG EINER TEXTILMASCHINE, SOWIE EINE ABSAUGVORRICHTUNG UND EINE TEXTILMASCHINE**
A SUCTION DEVICE AND A TEXTILE MACHINE AND METHOD FOR OPERATING A SUCTION DEVICE OF A TEXTILE MACHINE
PROCÉDÉ DE FONCTIONNEMENT D'UN DISPOSITIF D'ASPIRATION D'UNE MACHINE TEXTILE, AINSI QUE DISPOSITIF D'ASPIRATION ET MACHINE TEXTILE

(30) Priorität: 14.06.2019 DE 102019116224
(43) Veröffentlichungstag der Anmeldung: 30.12.2020
(73) Patentinhaber: Maschinenfabrik Rieter AG, 8406 Winterthur (CH)
(72) Erfinder: Stang, Bernhard, 85110 Kipfenberg (DE); Stephan, Adalbert, 92339 Beilngries/Paulushofen (DE)
(74) Vertreter: Canzler & Bergmeier Patentanwälte Partnerschaft mbB

(56) Entgegenhaltungen:
- DE-A1- 19 511 960
- DE-A1-102006 035 729
- DE-A1-102006 050 220
- DE-A1-102007 006 679
- DE-A1-102009 028 359

## Beschreibung

Die vorliegende Erfindung betrifft ein Verfahren zum Betreiben einer Absaugvorrichtung einer Textilmaschine mit einer Vielzahl von Arbeitsstellen, insbesondere einer Spinnmaschine, wobei durch die Absaugvorrichtung ein Luftstrom und ein Unterdruck erzeugt werden, sowie der Luftstrom mittels eines Filterelements gefiltert wird. Ein aktueller Druckverlust und/oder Volumenstrom wird am Filterelement bestimmt, woraus ein Ist-Wert an aktuell maximal gleichzeitig durchführbaren, Unterdruck anfordernden Operationen berechnet wird. Des Weiteren betrifft die Erfindung eine Absaugvorrichtung und eine Textilmaschine zur Ausführung zumindest von Teilen dieses Verfahrens.

Es ist bekannt, dass Absaugvorrichtungen an einer Vielzahl von Textilmaschinen eingesetzt werden und dort Schmutzstoffe, Staub und Flusen, welche während der Verarbeitung von Fasermaterialien anfallen, entfernen. Meist wird hierfür ein Luftstrom in den Bereichen von schmutzempfindlichen Anlagekomponenten durch einen oder mehrere Ventilatoren oder sonstigen Unterdruckquellen erzeugt und durch entsprechende Absaugrohre und/oder Absaugkanäle abgeführt. Zu diesen schmutzempfindlichen Anlagenkomponenten zählen beispielsweise die Spinnstellen oder das Streckwerk von Spinnmaschinen. Um die abgesaugte Luft von den Schmutzstoffen zu befreien, wird diese meist durch Filterelemente geleitet, welche in der Absaugvorrichtung in der Regel vor der Unterdruckquelle angeordnet sind und diese somit passiert werden müssen. Da es hierbei zu einer Ablage der Schmutzstoffe auf dem Filterelement kommt, muss dieses in gewissen Zeitabständen gereinigt und/oder getauscht werden. Dies kann sowohl manuell oder mit Hilfe von automatisch arbeitenden Reinigungsvorrichtungen erfolgen.

So schlägt die DE 10 2006 035 729 A1 ein Verfahren zum Absaugen und Filtern von staub- und/oder faserbelasteter Luft vor, wobei der Unterdruck vor und/oder nach dem Filter gemessen und gesteuert oder geregelt wird. Bei Abweichung von einem Unterdruck-Sollwert oder Unterdruck-Sollwertbereich wird der Filterreinigungsvorgang in Gang gesetzt.

Des Weiteren beschreibt die DE 10 2009 028 359 A1 ein Verfahren zur Steuerung der Absaugvorrichtung einer Textilmaschine, wobei die Drehzahl des Ventilators und der Betriebsstatus der Reinigungsvorrichtung aufeinander abgestimmt werden.

Die DE 195 11 960 A1 beschreibt ein Verfahren zum Regeln des Unterdrucks in einer Saugluftanlage einer Textilmaschine mit einer Vielzahl von Arbeitsstellen.

Während die genannten Verfahren bereits zu einem energieeffizienteren Betrieb der jeweiligen Textilmaschinen beitragen, besteht auch weiterhin das Verlangen nach weiteren Energieeinsparungen bei gleichzeitiger Produktionsoptimierung.

Aufgabe der vorliegenden Erfindung ist es somit, eine Absaugvorrichtung, eine Textilmaschine und ein Verfahren zum Betreiben einer Absaugvorrichtung einer Textilmaschine zu schaffen, welche sich durch eine signifikante Energieeinsparung bei gleichzeitiger Optimierung der Produktivität im Vergleich zu bereits bekannten Anlagen und Verfahren auszeichnet.

Die Aufgabe wird gelöst durch eine Absaugvorrichtung, eine Textilmaschine und ein Verfahren zum Betreiben einer Absaugvorrichtung einer Textilmaschine mit den Merkmalen der unabhängigen Patentansprüche. Vorgeschlagen wird ein Verfahren zum Betreiben einer Absaugvorrichtung einer Textilmaschine mit einer Vielzahl von Arbeitsstellen, insbesondere einer Spinnmaschine, wobei durch die Absaugvorrichtung ein Luftstrom und ein Unterdruck erzeugt werden, sowie der Luftstrom mittels eines Filterelements gefiltert wird. Ein aktueller Druckverlust und/oder Volumenstrom wird am Filterelement bestimmt, woraus ein Ist-Wert an aktuell maximal gleichzeitig durchführbaren, Unterdruck anfordernden Operationen berechnet wird. Dieser Ist-Wert beschreibt den aktuellen Zustand der Absaugvorrichtung und die aktuelle Produktivität. Ein Soll-Wert an mindestens gleichzeitig durchführbaren, Unterdruck anfordernden Operationen wird, insbesondere basierend auf einer aktuellen Fadenbruchlage der Arbeitsstellen, bestimmt. Der Soll-Wert kann beispielsweise aus einer in einer Steuerung hinterlegten Datenbank ermittelt und automatisch und/oder beispielsweise von einem Bediener manuell eingestellt werden. Eine automatisierte Ermittlung und Einstellung des Soll-Werts bezweckt eine maschineneigene Optimierung der Absaugvorrichtung. Vorteile bringt es zudem mit sich, wenn insbesondere ein Bediener manuell eine Korrektur dieses Soll-Werts vornehmen oder einen unabhängigen Soll-Wert einstellen kann und somit auf aktuelle und/oder künftige Ereignisse reagieren kann. Somit kann zusätzlich auf den Erfahrungsschatz des Bedieners zugegriffen werden. Dieser Soll-Wert wird mit dem Ist-Wert abgeglichen. Im Gegensatz zum gegenwärtigen Stand der Technik kann somit durch die Ermittlung, die Messung und den Vergleich dieser Soll- und IstWerte eine Optimierung der Absaugvorrichtung basierend auf die gleichzeitig durchführbaren, Unterdruck anfordernden Operationen derselben Arbeitsstelle oder verschiedener Arbeitsstellen erreicht werden. So kann die Absaugvorrichtung stets, beispielsweise abhängig von der aktuellen Fadenbruchlage, im optimalen Betriebsbereich betrieben werden.

Vorteile bringt es mit sich, wenn, sollte der Ist-Wert den Soll-Wert erreichen oder unterschreiten, die Notwendigkeit einer Filterreinigung signalisiert und/oder die Filterreinigung automatisiert durchgeführt wird. Somit kann der Filter der Absaugvorrichtung bei fortgeschrittener Ablage von Schmutzstoffen auf dem Filter automatisiert oder durch manuellen Einsatz nach der Signalisierung gereinigt werden. Dies hat im Allgemeinen eine Erhöhung des IstWertes zur Folge, damit dieser den Soll-Wert erreichen bzw. überschreiten kann.

Ebenso bringt es Vorteile mit sich, wenn die Anzahl der durchführbaren, Unterdruck anfordernden Operationen begrenzt wird, wenn der voraussichtliche Verbrauch zusätzlicher Operationen den Soll-Wert überschreiten würde. Dadurch kann insbesondere eine Abschätzung darüber erfolgen, wie hoch der Grad der Verschmutzung des Filters ist und/oder ob ein eingestellter oder errechneter Soll-Wert mit gegebener Absaugvorrichtung erreicht werden kann.

Auch ist es äußert vorteilhaft, wenn mittels des Soll-Werts eine Optimierung, insbesondere eine Produktionsoptimierung und/oder eine energetische Optimierung, der Textilmaschine erfolgt. Hierfür wird errechnet, welcher Soll-Wert notwendig ist, um eine maximale Produktivität der Textilmaschine zu gewährleisten. Gleichzeitig sollte der unnötige Energiebedarf durch eine hohe Verunreinigung des Filters betrachtet werden. Basierend auf diese beiden Größen wird ein Optimum des Soll-Werts errechnet. Ebenso ist es denkbar, dass lediglich eine dieser beiden Größen optimiert wird.

Vorteilhaft ist es, wenn eine Optimierungskennzahl manuell eingestellt wird, wobei diese einen Kompromiss zwischen Produktionsoptimierung und energetischer Optimierung definiert. Somit kann die Textilmaschine variabel auf eine eher produktionsoptimierte oder eher energetische Optimierung eingestellt werden.

Auch ist es von Vorteil, wenn der Soll-Wert aufgrund der Entwicklung der Fadenbruchlage vorzeitig angepasst wird und damit eine Überlastung vermieden wird. Dadurch kann bereits bei signifikant kleinen Änderungen der Fadenbruchlagen eine Abschätzung zur zukünftig notwendigen Optimierung der Absauganlage getroffen werden, um diese weiter im optimalen Zustand zu betreiben.

Besondere Vorteile bringt es mit sich, wenn der Energieverbrauch aufgrund getroffener Einstellung des Soll-Werts prognostiziert wird. Dies trägt zu einer besseren Einschätzung des energetischen Zustands der Absauganlage bei und hilft den optimalen Betriebszustand der Textilmaschine herzustellen.

Besonders vorteilhaft ist es, wenn bei nicht realisierter Filterreinigung und/oder bei einer zeitlich begrenzten Erhöhung des Ist-Werts eine Unterdruck anfordernde Operation, insbesondere einer Schmutzabsaugdüse oder aber auch einer anderen Absaugstelle, abgeschaltet wird. So können kurzzeitige Spitzen des Druckluftbedarfs ausgeglichen und die fehlerfreie Funktion der Absauganlage gewährleistet werden. So kann beispielsweise bestimmt werden, dass alle gleichartigen Absaugstellen, insbesondere Schmutzabsaugdüsen, der Textilmaschine bis zur erneuten Steigerung der Leistung der Absaugvorrichtung abgeschaltet werden.

Besondere Vorteile bringt es mit sich, wenn mit Hilfe einer Steuerung und/oder Regelung der Ist-Wert gesteuert und/oder geregelt wird. Dadurch kann der Ventilator stets so in der Drehzahl geregelt werden, damit der Ist-Wert den Soll-Wert erreicht. Auch kann die Steuerung derart ausgebildet sein, dass die Reinigung nach einer Drosselung der Produktionsgeschwindigkeit und/oder der Ventilatordrehzahl gestartet werden kann.

Des Weiteren ist es vorteilhaft, wenn der Druckverlust der Absaugvorrichtung vor und/oder nach dem Filterelement mit wenigstens einem Drucksensor gemessen und/oder dieser über den Leistungsanstieg eines Ventilators errechnet wird. Dadurch kann stets eine Aussage über den aktuellen Zustand des Filterelements und somit insbesondere auf dessen Verschmutzungsgrad getroffen werden. Erreicht dieser einen bestimmten Verschmutzungsgrad, der entweder zu einem nicht Erreichen des Soll-Werts durch den Ist-Wert oder zu einem nicht energetisch optimalen Zustand führt, wird der Reinigungsvorgang gestartet und/oder signalisiert.

Ferner wird eine Absaugvorrichtung zum Absaugen und Filtern von staubund/oder faserbelasteter Luft in Textilmaschinen mit einer Vielzahl von Arbeitsstellen, insbesondere Spinnmaschinen, die einen Ventilator zur Erzeugung eines Luftstroms und zur Bereitstellung eines Unterdrucks, und ein Filterelement zum Filtern des Luftstroms aufweist, vorgeschlagen. Erfindungsgemäß weist diese Absaugvorrichtung eine Auswerteeinrichtung zur Durchführung des Verfahrens nach der vorherigen Beschreibung, auf.

Die Absaugvorrichtung weist wenigstens einen Drucksensor zum Messen des Drucks vor und/oder nach dem Filterelement und/oder wenigstens eine Messeinrichtung zum Messen des Leistungsanstiegs des Ventilators und daraus Errechnung des Druckverlustes auf. Durch das Messen des Druckverlustes kann zu jeder Zeit der aktuelle Zustand des Filterelements bestimmt und auf die Notwendigkeit einer Filterreinigung hingewiesen oder diese automatisiert durchgeführt werden. Bei einer Messung dieses Druckverlustes über den Leistungsanstieg des Motors des Ventilators hat es zudem den Vorteil, dass nicht notwendigerweise zusätzliche Messtechnik benötigt wird, sondern eine Abschätzung dieses Druckverlusts direkt aus der Messeinrichtung des Ventilators erfolgt. Diese Messeinrichtung ist zumeist bereits für den allgemeinen Betrieb des Ventilators notwendig und/oder in der Regeleinrichtung enthalten.

Besondere Vorteile bringt es mit sich, wenn die Absaugvorrichtung eine Signaleinrichtung aufweist, zur Signalisierung der Notwendigkeit einer Filterreinigung und/oder des Starts der automatischen Filterreinigung. Somit kann der Filter der Absaugvorrichtung bei fortgeschrittener Ablage von Schmutzstoffen auf dem Filter automatisiert oder durch manuellen Einsatz nach der Signalisierung gereinigt werden. Auch trägt die Signalisierung einer automatisierten Filterreinigung zu einem verbesserten Arbeitsschutz bei, da ein Bediener auf eine Filterreinigung hingewiesen wird.

Vorteile bringt es zudem mit sich, wenn die Absaugvorrichtung eine Steuereinrichtung und/oder Regeleinrichtung aufweist, zum Steuern und/oder Regeln des Ist-Werts. Dies hat zur Folge, dass die Drehzahl des Ventilators stets geregelt werden kann, damit der Ist-Wert den Soll-Wert erreicht.

Des Weiteren wird eine Textilmaschine, insbesondere Spinnmaschine, mit einer Vielzahl von Unterdruck anfordernden Arbeitsstellen, und einer Absaugvorrichtung zum Absaugen und Filtern von staub- und/oder faserbelasteter Luft, vorgeschlagen. Erfindungsgemäß weist die Textilmaschine eine Absaugvorrichtung zur Durchführung des Verfahrens nach der vorherigen Beschreibung auf.

Weitere Vorteile der Erfindung sind in den nachfolgenden Ausführungsbeispielen beschrieben. Es zeigt:

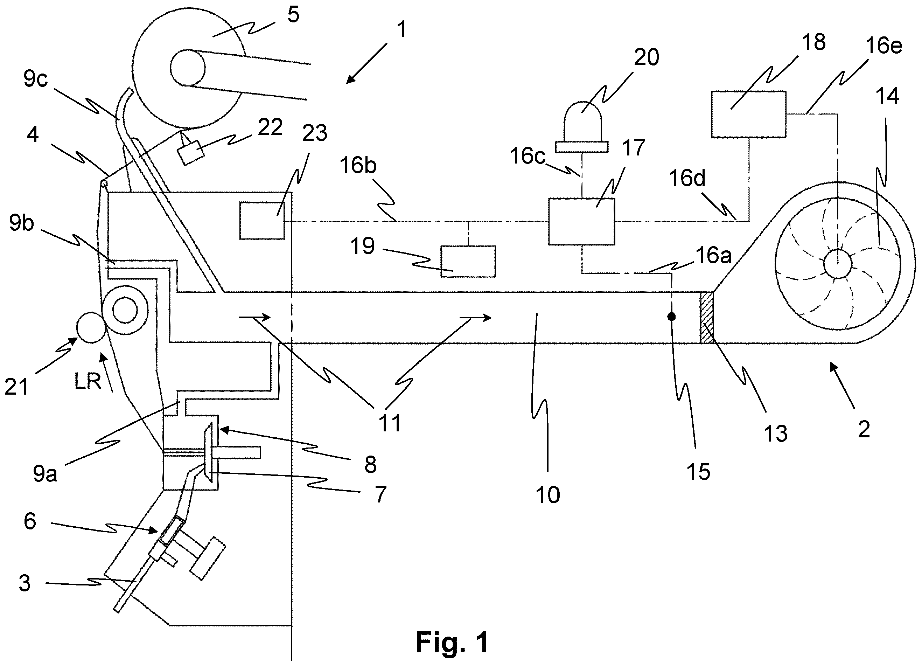

- **Figur 1**: einen schematischen Längsschnitt einer Textilmaschine mit einer Absaugvorrichtung.

Figur 1 zeigt eine schematische Seitenansicht einer Arbeitsstelle 1 einer Textilmaschine und eine daran anschließende Absaugvorrichtung 2. Die Textilmaschine kann eine Vielzahl an Arbeitsstellen 1 umfassen, um eine Produktivität der Textilmaschine entsprechend der Anzahl der Arbeitsstellen 1 zu erhöhen. Die Arbeitsstelle 1 ist im vorliegenden Ausführungsbeispiel als eine Spinnstelle einer Rotorspinnmaschine ausgebildet. Die Erfindung ist aber prinzipiell auf jede beliebige Textilmaschine anwendbar, insbesondere auf andere Spinnmaschinen.

Die Arbeitsstelle 1 stellt aus einem Faserband 3 einen Faden 4 her. Der Faden 4 durchläuft in einer Lieferrichtung LR die Arbeitsstelle 1 und wird schließlich auf eine Spule 5 aufgewickelt.

Zunächst wird das Faserband 3 einer Auflöseeinheit 6 zugeführt und von der Auflöseeinheit 6 in seine einzelnen Fasern aufgelöst. Die einzelnen Fasern werden zu einem Spinnrotor 7 geführt, der aus den einzelnen Fasern den Faden 4 herstellt. Der Spinnrotor 7 ist im vorliegenden Ausführungsbeispiel in einer Spinnbox 8 angeordnet, welche mit einem Unterdruck beaufschlagt ist. Dieser Unterdruck in der Spinnbox 8 wird über ein erstes Absaugrohr 9a hergestellt. Der durch den Spinnrotor 7 gebildete Faden 4 wird mit Hilfe eines Abzugswalzenpaares 21 vom Spinnrotor 7 aus der Spinnbox 8 abgezogen.

In Lieferrichtung LR dem Abzugswalzenpaar 21 nachgeordnet, weist die Arbeitsstelle 1 ein zweites Absaugrohr 9b auf, welches insbesondere zum Zwischenspeichern einer Schlaufe des Fadens 4 dient. Eine Changiereinrichtung 22 changiert den Faden 4 seitlich zur Lieferrichtung LR so, dass er in der gewünschten Weise auf der Spule 5 aufgewickelt wird. Außerdem ist ein drittes, stationär oder schwenkbar angeordnetes Absaugrohr 9c vorgesehen, das ein auf die Spule 5 aufgelaufenes Fadenende - beispielsweise nach einem Fadenbruch - finden und ansaugen kann.

Die Absaugrohre 9a, 9b und 9c münden im gezeigten Ausführungsbeispiel in einen gemeinsamen Absaugkanal 10. Zusätzlich zu den hier gezeigten Absaugrohren 9a, 9b, 9c ist zumindest ein zusätzliches Absaugrohr denkbar, welches insbesondere zur Schmutzabsaugung dient und an einer Schmutzabsaugdüse angeordnet ist. Es können auch noch weitere, hier nicht dargestellte Absaugungen, beispielsweise zur Reinigung der Arbeitsstelle oder zum Zwischenspeichern eines Fadenendes beim Anspinnen auf eine leere Hülse, vorgesehen sein, welche ebenso in den Absaugkanal 10 münden. Da die Unterdruckanforderungen der einzelnen Absaugrohre, insbesondere des ersten Absaugrohrs 9a der Spinnbox 8, unterschiedliche Anforderungen aufweisen können, sind separate Absaugkanäle 10 und/oder separate Absaugvorrichtungen 2 für die Absaugrohre 9a, 9b, 9c vorstellbar. Die Strömungsrichtung der abgesaugten und zu filternden Luft ist mit Pfeilen 11 angedeutet. Der oder die Absaugkanäle 10 sind an der oder die Absaugvorrichtungen 2 angeschlossen. An der Textilmaschine kann ein Absaugkanal 10 für die gesamte Textilmaschine vorgesehen sein und sich entlang der Vielzahl von Arbeitsstellen 1 erstrecken. Von jeder der Arbeitsstellen 1 münden die jeweiligen Absaugrohre 9a, 9b, 9c in den Absaugkanal 10. Ein Filterelement 13 befindet sich im dargestellten Anwendungsbeispiel zwischen dem Absaugkanal 10 und der Absaugvorrichtung 2. Ebenso könnte dieses Filterelement 13 auch im Absaugkanal 10 oder innerhalb der Absaugvorrichtung 2, insbesondere direkt an einem Ventilator 14, angeordnet sein. Das Filterelement 13 dient zur Filterung der staub- und/oder faserbelasteten Luft, welche vom Absaugkanal 10 an der Textilmaschine in Richtung der Pfeile 11 eingesaugt wird. Durch die Filterung dieser Luft lagern sich auf der Oberfläche des Filterelement 13 Schmutzstoffe, wie beispielsweise Staub und Fasern, ab und verstopfen das Filterelement 13 zunehmend.

Im Absaugkanal 10 und/oder in der Absaugvorrichtung 2 vor dem Ventilator 14 ist zumindest ein Drucksensor 15 installiert, welcher kontinuierlich oder in gewissen Zeitabständen den Unterdruck im Absaugkanal 10 misst und die Messwerte über eine erste Leitung 16a an eine Auswerteeinrichtung 17 weiterleitet. Zusätzlich oder anstatt des zumindest einen Drucksensors 15 kann die Auswerteeinrichtung 17, eine Regeleinrichtung 18 und/oder eine zusätzliche Messeinrichtung den Unterdruck bzw. den Druckverlust am Filterelement 13 anhand des Leistungsanstiegs des Ventilators 14 berechnen. In vorliegendem Anwendungsbeispiel wird der Druckverlust anhand eines Drucksensors 15 im Absaugkanal 10 bestimmt. Durch diesen Druckverlust wird ein Ist-Wert an aktuell maximal gleichzeitig durchführbaren, Unterdruck anfordernden Operationen berechnet. Ist das Filterelement 13 frei von Schmutzstoffen, so ist der Ist-Wert ein Maximal-Wert an aktuell maximal gleichzeitig durchführbaren, Unterdruck anfordernden Operationen. Der Maximal-Wert ist somit stets bekannt und kann mit dem aktuellen Ist-Wert abgeglichen werden. Dieser Vergleich zeigt den Grad der Verschmutzung des Filterelements 13 und/oder deutet auf sonstige Fehler in der Absaugvorrichtung 2 hin. Unterdruck anfordernde Operationen können hierbei beispielsweise Anspinnoperationen, wie das Suchen eines Fadenendes auf der Spule 5 oder das Zwischenspeichern einer Fadenschlaufe sein, oder aber das Reinigen der Arbeitsstelle 1 bzw. Spinnbox 8 betreffen.

Über eine zweite Leitung 16b ist die Auswerteeinrichtung 17 mit der Steuereinrichtung 23 der Textilmaschine und/oder mit einer Eingabeeinrichtung 19 verbunden. Die Leitung 16b leitet hierbei die Informationen eines Soll-Werts an aktuell maximal gleichzeitig durchführbaren, Unterdruck anfordernden Operationen und/oder einer aktuellen Fadenbruchlage einer oder mehrerer Arbeitsstellen 1 an die Auswerteeinrichtung 17 weiter. Der Soll-Wert wird auf Basis der aktuellen Fadenbruchlage der einzelnen Arbeitsstellen 1 der Textilmaschine erstellt. Somit sollte bei einer hohen Fadenbruchlage dieser Soll-Wert höher sein, da eine höhere Wahrscheinlichkeit besteht, eine große Anzahl an Unterdruck anfordernden Operationen zu benötigen. Bei einer niedrigen Fadenbruchlage kann dieser Soll-Wert geringer sein, da eher eine geringe Anzahl an Unterdruck anfordernde Operationen benötigt wird. Der Abgleich des Ist-Werts und des Soll-Werts kann somit in der Auswerteeinrichtung 17 erfolgen.

Mit zunehmender Maschinenlaufzeit lagern sich stetig mehr Schmutzstoffe auf dem Filterelement 13 ab. Durch den daraus entstehenden, erhöhten Druckverlust resultiert eine stetige Verkleinerung des Ist-Werts. Erreicht oder unterschreitet der Ist-Wert den Soll-Wert, so wird das von der Auswerteeinheit 17 registriert und diese Information über eine dritte Leitung 16c an eine Signaleinrichtung 20 geleitet. Diese Signaleinrichtung 20 signalisiert wiederrum die Notwendigkeit einer Filterreinigung. Ebenso kann die Filterreinigung automatisiert erfolgen, wobei in diesem Fall die Signaleinrichtung 20 als Warnsignal dient. Durch die Filterreinigung wird der Ist-Wert gesteigert und erreicht den Maximal-Wert. Da der Maximal-Wert den Wert definiert, den die Absaugvorrichtung 2 maximal leisten kann, sollte der Soll-Wert nicht über dem Maximal-Wert liegen.

Aufgrund des Abgleichs von Ist- Wert und Soll-Wert kann eine Optimierung der Absaugvorrichtung 2 erfolgen. Dies hat eine Produktionsoptimierung und/oder eine energetische Optimierung der Absaugvorrichtung 2 und/oder der Textilmaschine zur Folge. Somit kann die Absaugvorrichtung 2 je nach den aktuellen Erfordernissen durch die Auswerteeinrichtung 17 eingestellt werden. Darüber hinaus ist durch die Eingabeeinrichtung 19 die Eingabe einer Optimierungskennzahl möglich, welche den Kompromiss zwischen Produktionsoptimierung und energetischer Optimierung definiert. So kann eine detailliertere Einstellung zur Optimierung getroffen werden. Ebenso wird durch die Auswerteeinrichtung 17 aus den Informationen der Textilmaschine die Entwicklung der Fadenbruchlage abgeschätzt und fließt direkt in die Einstellung des Soll-Werts mit ein. So kann in kürzester Zeit auf Produktionsschwankungen reagiert werden. Falls eine kurzzeitige Produktionsschwankung entsteht oder eine Filterreinigung aufgrund externer Einwirkungen nicht möglich ist, können eine oder mehrere Absaugrohre 9a, 9b, 9c und/oder die hier nicht dargestellte Schmutzabsaugdüse abgeschaltet werden. Dies kann beispielsweise durch eingesetzte Drosselklappen erfolgen. Auf Basis des aktuellen und der Abschätzung des späteren Soll-Werts, kann die Auswerteeinrichtung 17 zusätzlich den Energieverbrauch prognostizieren.

Die Regelung und/oder Steuerung des Ventilators 14 übernimmt die Regeleinrichtung 18. Die Informationen von der Auswerteeinrichtung 17 werden hierfür über eine vierte Leitung 16d zur Regeleinrichtung 18 geleitet. Diese Regeleinrichtung 18 ist mit einer fünften Leitung 16e mit dem Ventilator 14 verbunden und regelt dessen Geschwindigkeit und somit den Unterdruck in der Absaugvorrichtung 2. Ist jedoch die maximale Geschwindigkeit des Ventilators 14 erreicht und der hieraus entstehende Ist-Wert nicht ausreichend, um den notwendigen Soll-Wert zu erreichen, ist eine Filterreinigung durchzuführen.

Im gezeigten Anwendungsbeispiel sind Auswerteeinrichtung 17, Eingabeeinrichtung 19, Signaleinrichtung 20, Regeleinrichtung 18 und Steuereinrichtung 23 der Textilmaschine jeweils als separate Einrichtungen ausgeführt. Ebenso können eine oder mehrere der einzelnen Funktionen der Auswerteeinrichtung 17, Eingabeeinrichtung 19, Signaleinrichtung 20, Regeleinrichtung 18 und/oder Steuereinrichtung 23 von einer gemeinsamen Einrichtung übernommen werden.

Die vorliegende Erfindung ist nicht auf das dargestellte und beschriebene Ausführungsbeispiel beschränkt. Abwandlungen im Rahmen der Patentansprüche sind möglich.

### Bezugszeichenliste

- 1: Arbeitsstelle
- 2: Absaugvorrichtung
- 3: Faserband
- 4: Faden
- 5: Spule
- 6: Auflöseeinheit
- 7: Spinnrotor
- 8: Spinnbox
- 9: Absaugrohre
- 10: Absaugkanal
- 11: Pfeile, Strömungsrichtung

- 13: Filterelement
- 14: Ventilator
- 15: Drucksensor(en)
- 16: Elektrische Leitungen
- 17: Auswerteeinrichtung
- 18: Regeleinrichtung des Ventilators
- 19: Eingabeeinrichtung
- 20: Signaleinrichtung
- 21: Abzugswalzenpaar
- 22: Changiereinrichtung
- 23: Steuereinrichtung der Textilmaschine
- LR: Lieferrichtung

## Patentansprüche

1. Verfahren zum Betreiben einer Absaugvorrichtung (2) einer Textilmaschine mit einer Vielzahl von Arbeitsstellen (1), insbesondere einer Spinnmaschine,
wobei durch die Absaugvorrichtung (2) ein Luftstrom und ein Unterdruck erzeugt werden,
sowie der Luftstrom mittels eines Filterelements (13) gefiltert wird, und wobei ein aktueller Druckverlust und/oder Volumenstrom am Filterelement (13) bestimmt wird,
woraus ein Ist-Wert an aktuell maximal gleichzeitig durchführbaren, Unterdruck anfordernden Operationen der Arbeitsstellen (1) berechnet wird,
**dadurch gekennzeichnet,**
**dass** ein Soll-Wert an mindestens gleichzeitig durchführbaren, Unterdruck anfordernden Operationen, insbesondere basierend auf einer aktuellen Fadenbruchlage der Arbeitsstellen (1), bestimmt wird und dieser Soll-Wert mit dem Ist-Wert abgeglichen wird.

2. Verfahren nach dem vorherigen Anspruch, **dadurch gekennzeichnet, dass**, sollte der Ist-Wert den Soll-Wert erreichen oder unterschreiten, die Notwendigkeit einer Filterreinigung signalisiert und/oder die Filterreinigung automatisiert durchgeführt wird.

3. Verfahren nach einem oder mehreren der vorherigen Ansprüche,
**dadurch gekennzeichnet,**
**dass** die Anzahl der durchführbaren, Unterdruck anfordernden Operationen begrenzt wird, wenn der voraussichtliche Verbrauch zusätzlicher Operationen den Soll-Wert überschreiten würde.

4. Verfahren nach einem oder mehreren der vorherigen Ansprüche,
**dadurch gekennzeichnet,**
**dass** mittels des Soll-Werts eine Optimierung, insbesondere eine Produktionsoptimierung und/oder eine energetische Optimierung, der Textilmaschine erfolgt.

5. Verfahren nach einem oder mehreren der vorherigen Ansprüche,
**dadurch gekennzeichnet,**
**dass** eine Optimierungskennzahl manuell eingestellt wird, wobei diese einen Kompromiss zwischen Produktionsoptimierung und energetischer Optimierung definiert.

6. Verfahren nach einem oder mehreren der vorherigen Ansprüche,
**dadurch gekennzeichnet,**
**dass** der Soll-Wert aufgrund der Entwicklung der Fadenbruchlage vorzeitig angepasst wird und damit eine Überlastung vermieden wird.

7. Verfahren nach einem oder mehreren der vorherigen Ansprüche,
**dadurch gekennzeichnet,**
**dass** der Energieverbrauch aufgrund getroffener Einstellung des Soll-Werts prognostiziert wird.

8. Verfahren nach einem oder mehreren der vorherigen Ansprüche,
**dadurch gekennzeichnet,**
**dass** bei nicht realisierter Filterreinigung und/oder bei einer zeitlich begrenzten Erhöhung des Ist-Werts zumindest eine Unterdruck anfordernde Operation, insbesondere einer Schmutzabsaugdüse, abgeschaltet wird.

9. Verfahren nach einem oder mehreren der vorherigen Ansprüche,
**dadurch gekennzeichnet,**
**dass** mit Hilfe einer Steuerung und/oder Regelung der Ist-Wert gesteuert und/oder geregelt wird.

10. Verfahren nach einem oder mehreren der vorherigen Ansprüche,
**dadurch gekennzeichnet,**
**dass** der Druckverlust der Absaugvorrichtung (2) vor und/oder nach dem Filterelement (13) mit wenigstens einem Drucksensor (15) gemessen und/oder dieser über den Leistungsanstieg eines Ventilators (14) errechnet wird.

11. Absaugvorrichtung (2) zum Absaugen und Filtern von staub- und/oder faserbelasteter Luft in Textilmaschinen mit einer Vielzahl von Arbeitsstellen (1), insbesondere Spinnmaschinen,
die einen Ventilator (14) zur Erzeugung eines Luftstroms und zur Bereitstellung eines Unterdrucks,
und ein Filterelement (13) zum Filtern des Luftstroms aufweist,
und mit einer Auswerteeinrichtung (17), **dadurch gekennzeichnet,**
- **dass** die Auswerteeinrichtung (17) zur Durchführung des Verfahrens nach einem der vorherigen Ansprüche ausgelegt ist,
**dass** die Absaugvorrichtung (2) wenigstens einen Drucksensor (15) aufweist, zum Messen des Drucks vor und/oder nach dem Filterelement (13) und/oder
- **dass** die Absaugvorrichtung (2) wenigstens eine Messeinrichtung aufweist, zum Messen des Leistungsanstiegs des Ventilators (14) und daraus Errechnung des Druckverlustes.

12. Absaugvorrichtung (2) nach dem vorherigen Anspruch, **dadurch gekennzeichnet,**
**dass** die Absaugvorrichtung (2) eine Signaleinrichtung (20) aufweist, zur Signalisierung der Notwendigkeit einer Filterreinigung und/oder des Starts der automatischen Filterreinigung.

13. Absaugvorrichtung (2) nach einem oder mehreren der vorherigen Ansprüche 11 oder 12, **dadurch gekennzeichnet,**
**dass** die Absaugvorrichtung (2) eine Steuereinrichtung und/oder Regeleinrichtung (18) aufweist, zum Steuern und/oder Regeln des Ist-Werts.

14. Textilmaschine, insbesondere Spinnmaschine,
mit einer Vielzahl von Unterdruck anfordernden Arbeitsstellen (1), und einer Absaugvorrichtung (2) zum Absaugen und Filtern von staubund/oder faserbelasteter Luft, **dadurch gekennzeichnet,**
**dass** die Absaugvorrichtung (2) nach einem der vorherigen Ansprüche 11 bis 13 ausgelegt ist.

## Claims

1. A method for operating a suction device (2) of a textile machine comprising a plurality of workstations (1), in particular a spinning machine,
wherein an air flow and a vacuum are produced with the aid of the suction device (2),
and the air flow is filtered with the aid of a filter element (13), and wherein a present loss of pressure and/or a volume flow at the filter element (13) are/is determined,
on the basis of which an actual value at presently maximally simultaneously executable, vacuum-requiring operations of the workstations (1) is calculated,
**characterized in that**
a setpoint value at at least simultaneously executable, vacuum-requiring operations is determined, in particular, based on a present yarn break position of the workstations (1), and
this setpoint value is compared to the actual value.

2. The method as claimed in the preceding claim, **characterized in that** if the actual value should reach or fall below the setpoint value,
the need for a filter cleaning is signaled and/or the filter cleaning is carried out in an automated manner.

3. The method as claimed in one or more of the preceding claims,
**characterized in that**
the number of executable, vacuum-requiring operations is limited, if the expected consumption of additional operations would exceed the setpoint value.

4. The method as claimed in one or more of the preceding claims,
**characterized in that**
an optimization, in particular a production optimization and/or an energy optimization of the textile machine takes place with the aid of the setpoint value.

5. The method as claimed in one or more of the preceding claims,
**characterized in that**
an optimization identifier is manually set,
wherein this defines a compromise between production optimization and energy optimization.

6. The method as claimed in one or more of the preceding claims,
**characterized in that**
the setpoint value is prematurely adapted on the basis of the development of the yarn break position, and, at this, an overload is avoided.

7. The method as claimed in one or more of the preceding claims,
**characterized in that**
the energy consumption is predicted on the basis of the setting of the setpoint value that was implemented.

8. The method as claimed in one or more of the preceding claims,
**characterized in that**
at least one vacuum-requiring operation, in particular an operation of a trash removal nozzle, is switched off if filter cleaning has not been carried out and/or in the case of a temporary increase of the actual value.

9. The method as claimed in one or more of the preceding claims,
**characterized in that**
the actual value is controlled and/or regulated with the aid of a control system and/or a regulating system.

10. The method as claimed in one or more of the preceding claims,
**characterized in that**
the loss of pressure of the suction device (2) upstream and/or downstream from the filter element (13) is measured with the aid of at least one pressure sensor (15) and/or the loss of pressure is calculated on the basis of the power increase of a ventilator (14).

11. A suction device (2) for removing and filtering dust- and/or fiber-loaded air in textile machines comprising a plurality of workstations (1), in particular spinning machines,
which comprises a ventilator (14) for producing an air flow and for providing a vacuum,
and a filter element (13) for filtering the air flow,
and comprising an evaluation unit (17), **characterized in that**
- the evaluation unit (17) is designed for carrying out the method as claimed in one of the preceding claims,
the suction device (2) comprises at least one pressure sensor (15) for measuring the pressure upstream and/or downstream from the filter element (13), and/or
- the suction device (2) comprises at least one measuring unit for measuring the power increase of the ventilator (14) and, on the basis thereof, calculating the loss of pressure.

12. The suction device (2) as claimed in the preceding claim, **characterized in that**
the suction device (2) comprises a signal unit (20) for signaling the need for a filter cleaning and/or the start of the automatic filter cleaning.

13. The suction device (2) as claimed in one or more of the preceding claims 11 or 12, **characterized in that**
the suction device (2) comprises a control unit and/or regulating unit (18) for controlling and/or regulating the actual value.

14. A textile machine, in particular a spinning machine,
comprising a plurality of vacuum-requiring workstations (1),
and a suction device (2) for removing and filtering dust- and/or fiber-loaded air, **characterized in that**
the suction device (2) is designed as claimed in one of the preceding claims 11 to 13.

## Revendications

1. Procédé pour exploiter un dispositif d'aspiration (2) d'une machine textile comportant une pluralité de postes de travail (1), en particulier d'une machine à filer,
dans lequel un courant d'air et une dépression sont générés par le dispositif d'aspiration (2),
et le courant d'air est filtré à l'aide d'un élément filtrant (13), et
dans lequel une perte de pression et/ou un débit volumique actuel(s) est/sont déterminé(s) à l'élément filtrant (13),
à partir de quoi est calculé un nombre réel d'opérations des postes de travail (1) pouvant actuellement au maximum être effectuées simultanément et demandant une dépression,
**caractérisé en ce que**
un nombre de consigne d'opérations pouvant être effectuées au minimum simultanément et demandant une dépression est déterminé, en particulier sur la base d'une situation de rupture de fil actuelle des postes de travail (1), et
ce nombre de consigne est comparé au nombre réel.

2. Procédé selon la revendication précédente, **caractérisé en ce que** si le nombre réel atteint ou reste inférieur au nombre de consigne, la nécessité d'un nettoyage du filtre est signalée et/ou le nettoyage du filtre est effectué de manière automatisée.

3. Procédé selon l'une quelconque ou plusieurs des revendications précédentes, **caractérisé en ce que** le nombre d'opérations pouvant être effectuées, et demandant une dépression, est limité si la consommation prévisible d'opérations supplémentaires dépasserait le nombre de consigne.

4. Procédé selon l'une quelconque ou plusieurs des revendications précédentes, **caractérisé en ce qu'**une optimisation, en particulier une optimisation de la production et/ou une optimisation énergétique, de la machine textile est effectuée à l'aide du nombre de consigne.

5. Procédé selon l'une quelconque ou plusieurs des revendications précédentes, **caractérisé en ce qu'**un indice d'optimisation est réglé manuellement,
celui-ci définissant un compromis entre l'optimisation de la production et l'optimisation énergétique.

6. Procédé selon l'une quelconque ou plusieurs des revendications précédentes, **caractérisé en ce que** le nombre de consigne est adapté par anticipation sur la base de l'évolution de la situation de rupture de fil, ce qui permet d'éviter une surcharge.

7. Procédé selon l'une quelconque ou plusieurs des revendications précédentes, **caractérisé en ce que** la consommation d'énergie est pronostiquée sur la base du réglage du nombre de consigne.

8. Procédé selon l'une quelconque ou plusieurs des revendications précédentes, **caractérisé en ce que**, dans le cas où le nettoyage du filtre n'est pas réalisé et/ou dans le cas d'une augmentation du nombre réel limitée dans le temps, au moins une opération demandant une dépression, en particulier d'une buse d'aspiration de saletés, est arrêtée.

9. Procédé selon l'une quelconque ou plusieurs des revendications précédentes, **caractérisé en ce que** le nombre réel est commandé et/ou régulé à l'aide d'une commande et/ou d'un régulateur.

10. Procédé selon l'une quelconque ou plusieurs des revendications précédentes, **caractérisé en ce que** la perte de pression du dispositif d'aspiration (2) est mesurée en amont et/ou en aval de l'élément filtrant (13) par au moins un capteur de pression (15) et/ou est calculée par l'intermédiaire de la montée en puissance d'un ventilateur (14).

11. Dispositif d'aspiration (2) pour aspirer et filtrer de l'air chargé de poussières et/ou de fibres dans des machines textiles comportant une pluralité de postes de travail (1), en particulier des machines à filer,
qui comporte un ventilateur (14) pour générer un courant d'air et fournir une dépression,
et un élément filtrant (13) pour filtrer le courant d'air,
et avec un dispositif d'évaluation (17), **caractérisé en ce que**
- le dispositif d'évaluation (17) est conçu pour la mise en application du procédé selon l'une quelconque des revendications précédentes,
- **en ce que** le dispositif d'aspiration (2) présente au moins un capteur de pression (15) pour mesurer la pression en amont et/ou en aval de l'élément filtrant (13) et/ou
- que le dispositif d'aspiration (2) présente au moins un dispositif de mesure pour mesurer la montée en puissance du ventilateur (14) et calculer à partir de là la perte de pression.

12. Dispositif d'aspiration (2) selon la revendication précédente, **caractérisé en ce que** le dispositif d'aspiration (2) comprend un dispositif de signalisation (20) pour signaler la nécessité d'un nettoyage du filtre et/ou du démarrage du nettoyage automatique du filtre.

13. Dispositif d'aspiration (2) selon l'une quelconque ou plusieurs des revendications 11 ou 12 précédentes, **caractérisé en ce que** le dispositif d'aspiration (2) comporte un dispositif de commande et/ou un dispositif de régulation (18) pour commander et/ou réguler le nombre réel.

14. Machine textile, en particulier machine à filer,
avec une pluralité de postes de travail (1) demandant une dépression, et un dispositif d'aspiration (2) pour aspirer et filtrer de l'air chargé de poussières et/ou de fibres, **caractérisée en ce que** le dispositif d'aspiration (2) est conçu selon l'une quelconque des revendications 11 à 13 précédentes.
